# EUROPEAN PATENT APPLICATION

(11) **EP 4 095 483 A1**
(43) Date of publication of application: **30.11.2022**
(21) Application number: 21175645.7
(22) Date of filing: 25.05.2021
(51) Int. Cl.: G01C 13/00

(54) **BATHYMETRIC SURVEY SYSTEM AND METHOD**

(71) Applicant: Xocean Limited, A91 E765 Greenore (IE)
(72) Inventor: IVES, James, Greenore, A91 E765 (IE); CARLISLE, Andrew, Greenore, A91 E765 (IE); HARNETT, Kevin, Greenore, A91 E765 (IE); MALLACE, Duncan, Greenore, A91 E765 (IE)
(74) Representative: FRKelly

(57) **Abstract**

The present invention provides a bathymetric survey system and method, and in particular a system and method involving multiple unmanned autonomous vessels arranged to provide improved efficiency when conducting a bathymetric survey, by traversing a first survey line with a first lead vessel while mapping the seabed and water depth beneath the first vessel, dynamically generating an adjacent survey line, as the first vessel traverses the fist survey line, based on mapping data acquired from traversing the first survey line, and traversing the adjacent survey line with a second vessel trailing the first vessel while mapping the seabed and water depth beneath the second vessel.

## Description

### Field of the invention

The present invention is concerned with a bathymetric survey system and method, and in particular a bathymetric system and method involving multiple autonomous unmanned vessels arranged to provide improved efficiency when conducting a bathymetric survey.

### Background of the invention

A bathymetric survey is performed to measure the depth of water in the survey area and as a result map the topography of the seabed. A survey is undertaken in order to accurately map the variation in water depth, for example for the purposes of establishing whether the surveyed area is sufficiently deep for certain vessels or other activities. Surveys may also be performed at different times of the day or year, in order to establish the differing water depths during different tides, for example to establish if an area is accessible to vessels year round regardless of the phase of the tide. There are however limitations in relation to areas that can be safely surveyed, in particular due to shallow water depth which may not permit a survey vessel to safely navigate the desired survey area.

Surveys are conventionally carried out using a bathymetric sonar located on the underside of a conventional manned surface vessel. The general principal essentially involves dividing the area to be surveyed into an array of generally parallel strips which are subsequently mapped by traversing the survey vessel back and forth along consecutive strips until the entire survey area has been covered. The sonar used to map the seabed and water depth extends downwardly from the vessel and fanning out laterally at a fixed angle to effectively form a swath on sonar the seabed, and thus the coverage of this swath is dependent on the water depth or seabed profile, which is typically not known precisely before the survey is carried out.

The edge of the swath will therefore vary along the survey lines or strips, when viewed from above. It is thus necessary to overlap adjacent strips to ensure full coverage of the survey area, as any gaps or unmapped areas between adjacent strips could contain significant profile changes in the seabed which would then be missing from the survey and could pose a hazard to passing vessels or other marine operations. The greater the overlap between adjacent strips the greater the overall accuracy of the survey, but also the greater the length of time taken due to an increased number of strips or traverses of the survey area by the survey vessel. The overlap between survey swaths is typically defined by the survey customer, and can vary significantly.

As the cost of a bathymetric survey is primarily determined by the time taken to conduct the survey, the survey lines or strips are preferably planned to achieve a required minimum level of overlap to ensure complete coverage while also seeking to minimise excess overlap and thus wasted survey time. However as noted above, the exact water depth in the survey area is generally not known in advance, and so it is not possible to maximise the efficiency of the survey via the survey lines and thus time spent by the survey vessel.

It is therefore an object of the present invention to provide a bathymetric survey method and system which address the above mentioned problems.

### Summary of the invention

According to a first aspect of the present invention there is provided a bathymetric survey method comprising the steps of traversing a first survey line with a first lead vessel while mapping the seabed and water depth beneath the first vessel; dynamically generating an adjacent survey line, as the first vessel traverses the fist survey line, based on mapping data acquired from traversing the first survey line; and traversing the adjacent survey line with a second vessel trailing the first vessel while mapping the seabed and water depth beneath the second vessel.

Preferably, the adjacent survey line is generated such as to minimise overlap between a first swath of seabed corresponding to the first survey line and a second swath of seabed corresponding to the adjacent survey line.

Preferably, the adjacent survey line is generated by the first vessel and transmitted to the second vessel as the first vessel traverses the first survey line.

Preferably, the second vessel begins traversing the adjacent survey line while the first vessel is traversing the first survey line.

Preferably, the survey method comprises utilising an unmanned first and/or second vessel.

Preferably, the survey method comprises utilising an autonomous first and/or second vessel.

Preferably, the survey method comprises projecting a multi-beam sonar signal from the first and/or second vessel to map the seabed and water depth.

Preferably, the survey method comprises utilising a plurality of second vessels to conduct the survey.

Preferably, all but the rearmost second vessel generate a respective adjacent survey line which the adjacent second vessel traverses.

Preferably, the first vessel dynamically generates an adjacent survey line for each of the port and starboard sides of the first vessel; and a pair of the second vessels simultaneously traverse the adjacent survey lines aft of the first vessel.

Preferably, the lag between the first vessel and the second vessel is minimised as determined by the time taken to generate the adjacent survey line and to transmit the adjacent survey line to the second vessel.

According to a second aspect of the present invention there is provided a bathymetric survey system comprising a first lead vessel including a bathymetric transducer operable to map the seabed and water depth beneath the first vessel when traversing a first survey line; a processor operable to dynamically generate an adjacent survey line, as the first vessel traverses the fist survey line, based on mapping data acquired from the bathymetric transducer; and a second vessel including a bathymetric transducer operable to map the seabed and water depth beneath the second vessel when traversing the adjacent survey line.

Preferably, the first and/or the second vessel are unmanned.

Preferably, the first and/or the second vessel are autonomous.

Preferably, the processor is located on the first vessel and the first and second vessels are adapted for direct or indirect communication therebetween.

Preferably, the processor is operable to generate the adjacent survey line such as to minimise overlap with the first survey line.

As used herein, the term "dynamically" is intended to mean that a varying output is generated in real time in response to a varying input, for example an undulating surface topography is mapped in real time by travelling above the surface, and the data acquired in that mapping is used to generate a subsequent or adjacent path to be travelled above the surface.

As used herein, the term "swath" is intended to mean a broad strip or band and which may vary in size or shape when moving across a varying surface topography such as the seabed.

As used herein, the term "seabed" is intended to mean the bed or underlying surface of a body of water suitable to be surveyed and including oceans, lakes, rivers, or any other salt or fresh body of water.

### Brief description of the drawings

The present invention will now be described with reference to the accompanying drawings, in which:
Figure 1 illustrates a schematic representation of a vessel on a body of water, as viewed from aft, and including an underslung bathymetric sonar transducer and a downwardly and outwardly extending sonar swath incident on an undulating seabed;
Figure 2 illustrates the above vessel positioned on a first survey line and also on a subsequent overlapping survey line to illustrate the overlap between the sonar swaths on the undulating seabed between adjacent traverses of the vessel across an area to be surveyed;
Figure 3 illustrates a schematic representation, in plan, of an idealised survey area showing a first survey line along which a survey vessel travels, and further illustrating the outer edge of the sonar coverage from the vessel following travel along the first survey line;
Figure 4 illustrates the survey area illustrated in Figure 3 including an ideal adjacent survey line to the first survey line which is intended to achieve the minimum overlap with the swath of coverage from travel along the first survey line; and
Figure 5 illustrates a bathymetric survey method according to the invention showing a first survey vessel traversing the first survey line as illustrated in Figure 4 and a second trailing survey vessel following the second survey line which is being dynamically generated by the first vessel and transmitted to the second vessel.

### Detailed description of the drawings

The present invention concerns a system and method for conducting a bathymetric survey with improved efficiency, and preferably utilising at least a pair of unmanned and autonomous surface vessels as described hereinafter, to substantially reduce the time, cost and complexity of undertaking a bathymetric survey.

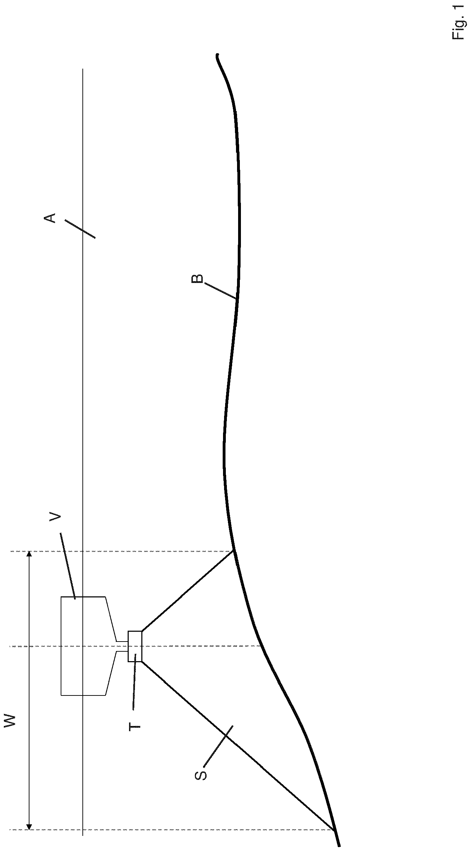

A prior art survey vessel V is illustrated schematically in Figure 1. The vessel V, as seen from aft, is located on a body of water A in an area to be surveyed. The vessel V includes a sonar transducer T fixed to the underside of the vessel V in conventional fashion. The seabed B located beneath the vessel V can be observed to be undulating transversely with respect to the direction of travel of the vessel V, but it will also be understood that such undulations or changes in topography will also occur in the direction of travel of vessel V, that is into and out of the plane of the drawing. As such the topography of the seabed B will normally vary in all directions, and thus the depth of the water also varies, and it is this aspect that is generally the focus of any such bathymetric survey.

As a result of the undulating seabed B, the width W of a swath S of sonar emitted from the transducer T will vary as the vessel V travels along a particular path or line in the survey area. The vessel V may be equipped with a GPS antenna or the like in order to follow a predetermined first survey line across an area to be surveyed. This first survey line may be of any geometry, depending on the survey area, and will normally track one edge of the survey area, with the sonar then covering a swath S beneath the vessel V in order to map a first strip or section of the survey area. The vessel V would then return along an adjacent and generally parallel predetermined path, again using GPS to follow the correct course. These predetermined paths or lines will have been calculated and mapped based on estimates of the local water depth in order to divide the survey area into generally parallel strips, but with sufficient overlap of adjacent strips to ensure full coverage of the survey area during each pass of the vessel V.

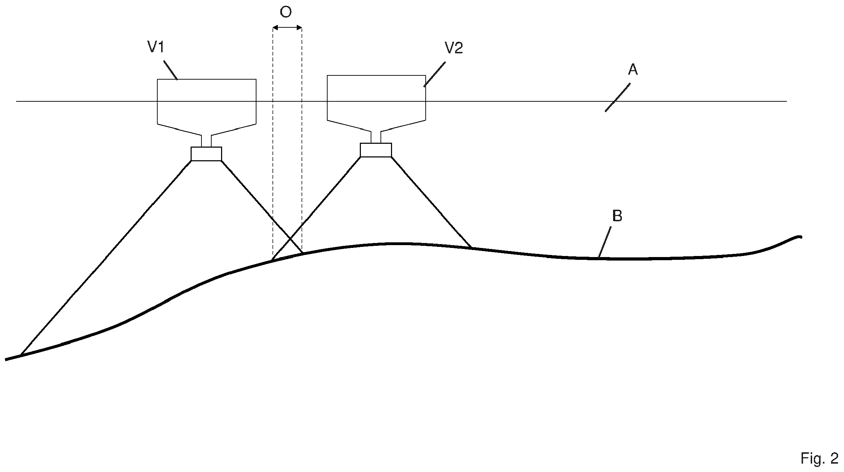

Thus as is visualised schematically in Figure 2, the vessel V₁ will travel along the first survey line drawing the swath S of sonar along the seabed B and collecting mapping/water depth data in known fashion. Once the vessel V has reached the end of the survey area it will turn around and proceed back across the survey area on a generally parallel adjacent second survey line, as indicated by the second instance of the vessel V₂. The swaths S of sonar will have an overlap O to ensure that the seabed and water depth are fully mapped. This process is repeated by the vessel V until the full survey area has been traversed and mapped. The adjacent survey lines are predetermined to achieve the required minimum level of overlap as dictated by the survey customer, but to minimise excess overlap and thus wasted survey time and cost.

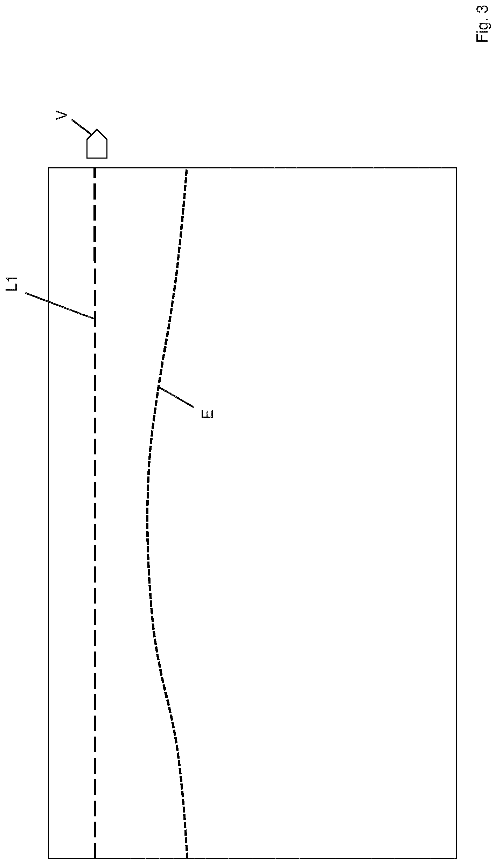

However the planning of the survey lines can not be as efficient as possible due to the uncertainty regarding the water depth and seabed B topography. Figure 3 illustrates an idealised survey area showing a first predetermined survey line L1 along which a survey vessel V travels as detailed above, and further illustrating the outer edge E of the sonar coverage from the vessel V following travel along the first survey line L1. As can be seen the outer edge E is not parallel to the first survey line L1 as a result of the variation in depth of the water resulting from the undulating topography of the seabed B.

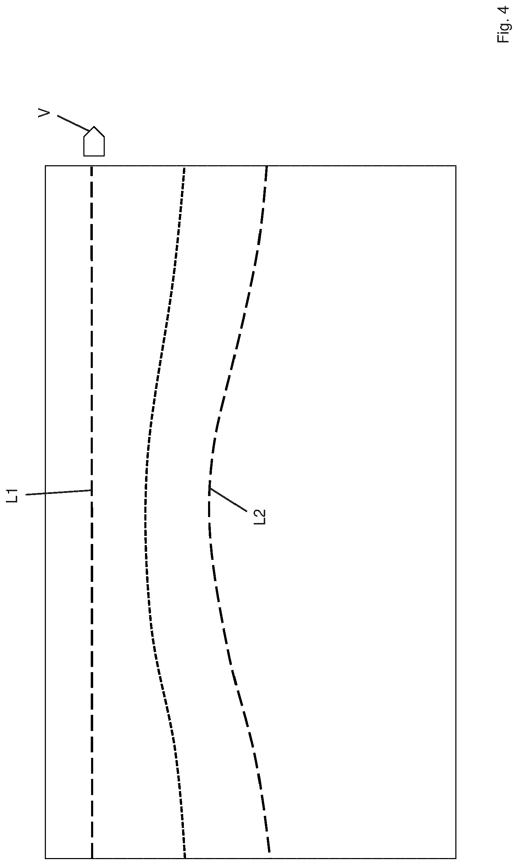

Figure 4 illustrates an ideal second survey line L2 which is therefore designed or mapped to achieve the predefined overlap with the outer edge E of the sonar coverage from the first survey line L1 without any waste. Prior art survey systems and methods are operable to autonomously plan the array of survey lines in advance of the survey, which information can then be supplied to a survey vessel which can then follow the predetermined lines, preferably using the vessel autopilot. However as noted above, a suitably large overlap between adjacent swaths S must be factored in to the planned route in order to ensure that unknown variations in the depth of the water will not result in gaps in the mapped area/water depth data.

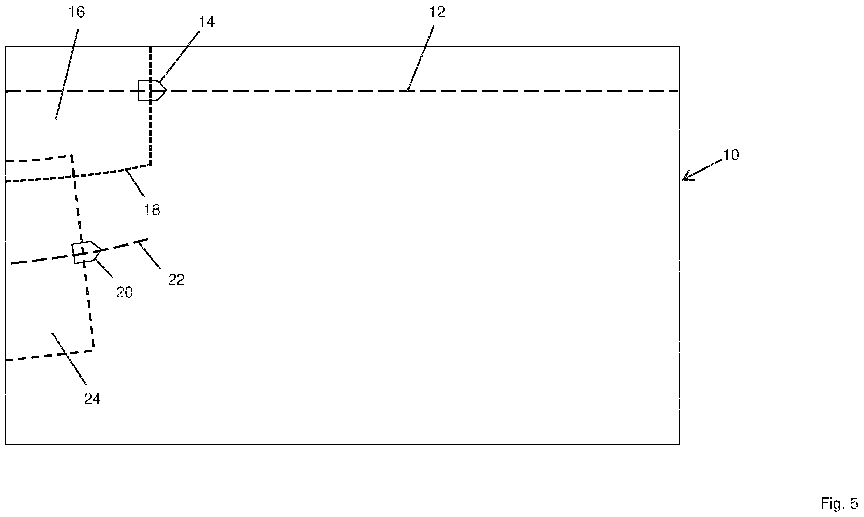

Referring now to Figure 5 the system and method of conducting a bathymetric survey according to the present invention are illustrated. The method is concerned with conducting a more efficient bathymetric survey of a predetermined survey area 10, shown in Figures 5 as an idealised rectangular area, but which in reality is likely to be a less conventional shape, and may for example follow a shoreline or circumscribe islets or other marine features. The method comprises traversing a first survey line 12 with a first or lead vessel 14, which first survey line 12 is preferably predetermined and dictated by the survey area 10, for example extending parallel to an outer boundary of the survey area 10, in this case an upper edge, as seen from above, of the survey area 10. This first survey line may be mapped or planned using conventional systems, and the requisite data, such as GPS waypoints, supplied to or saved on the first vessel 14. While the first vessel 14 is traversing the first survey line 12 the seabed and water depth are mapped using a conventional sonar transducer (not shown) located beneath the vessel 14 as hereinbefore described with reference to the prior art survey vessel.

In a preferred embodiment the lead vessel 14 is an autonomous unmanned surface vessel (USV), but it will of course be understood that a conventional vessel could be employed. Such an unmanned and autonomous vessel will include hardware and software to implement autopilot functionality, allowing the vessel 14 to travel to the start of the first survey line 12 from a remote launch location if desired, and to then traverse the pre-planned first survey line 12. Data identifying the first survey line 12 may be stored on board the first vessel 14 prior to launch or may be transmitted to the vessel 14 during transit to the survey area. This identifying data will generally take the form of an sequence of GPS coordinates which the vessel 14 will travel to in sequence to the traverse the first survey line 12. The vessel 14 will thus include the requisite network hardware and software to allow transmission to and from the first vessel 14, which may be adapted to communicate via satellite link, peer to peer, or via any other available network.

As illustrated in Figure 5, as the first vessel 14 traverses the first survey line 12 a progressing swath of seabed/water depth is mapped resulting in a first strip 16 of the survey area 10 being mapped and recorded once the first vessel 14 reaches the far side of the survey area. The data may be recorded and processed by suitable hardware which is preferably located on-board the first vessel 14, but may be located elsewhere, with raw or partially processed data being transmitted from the first vessel 14 for remote processing and storage. An edge 18 (inboard of the outer boundary of the survey 10) of the first strip 16 is not parallel to the first survey line 12 for the reasons detailed above regarding the changing topography of the seabed.

The method of the invention involves utilising at least one second vessel 20 to traverse a second survey line 22 that is dynamically generated utilising the mapping data acquired from the first vessel 14 traversing the first survey line 12, as the first vessel 14 traverses the first survey line 12. The data utilised to dynamically generate the second survey line 22 includes data relating to the profile and location of the edge 18 of the first strip 16, such that the second survey line 22 is essentially parallel to the edge 18 and offset the correct distance from the edge 18 to ensure minimum overlap of adjacent strips but with full coverage. The second survey line 22 may for example be generated as a sequence of GPS coordinates which can then be used by an autopilot system on the second vessel 20. The second survey line 22 is preferably dynamically generated by suitable processing hardware and software (not shown) located on-board the first vessel 14 and while the first vessel 14 traverses the first survey line 12.

Data for the second survey line 22 can then be transmitted from the first vessel 14 to the second vessel 20, preferably via direct transmission between the vessels 12, 20 using conventional network transmission means, although any other form of transmission may be employed, for example via any suitable intermediate network such as via cloud communication. This allows the second vessel 20 to traverse the second survey line 22 while the first vessel 14 is traversing the first survey line 12, with the second vessel 22 trailing the first vessel 14 by a small distance, which may for example only be limited or dictated by the time taken to process the mapping data from the first survey line 12, dynamically plot the second survey line 22, and transmit the appropriate information to the second vessel 20. It should also be understood that raw data from mapping along the first survey line 12 could be continuously transmitted from the first vessel 14 to the second vessel 20 or an intermediate location at which the data could be processed in order to dynamically generate the second survey line 22. For example the second vessel 20 could include the necessary equipment to process the raw mapping data from the first vessel 14 and to dynamically generate the second survey line 22.

By dynamically generating the second survey line 22 based on detailed bathymetric data acquired from traversing the first survey line 12, the second survey line 22 is optimised to minimise the overlap of a second strip 24 of mapped seabed with the first strip 16, thus reducing the time taken to conduct the survey. In addition it allows a second and potentially additional vessels to be utilised, further significantly reducing the survey time. For example multiple vessels could be employed, with each vessel dynamically generating the subsequent survey line, allowing large strips of survey area to be covered in a single pass of the array of vessels. One or more vessels could also be located on both the port and starboard sides of the lead vessel, which could be adapted to dynamically generate a subsequent survey line for each of the port and starboard sides. In that case the first survey line to be initially followed by the lead vessel would likely be located towards the centre of the survey area, but it will be understood that many variants of the methodology may be employed, for example to suit the survey area, time, number of vessels, etc.

Once the vessels 14, 20 reach the end of the respective survey line, the vessels 14, 20 will turn around and return across the survey area in the opposite direction in order to map subsequent strips of the survey area. The mapping data acquired from the second vessel 20 traversing the second survey line 22 can be transmitted to the first vessel 14 and utilised to generate a further survey line for the first survey vessel 14 to follow in returning across the survey area. The first vessel 14 would, as described above, then dynamically generate an adjacent survey line for the second vessel 20 to follow back across the survey area trailing the first vessel 14. This process of travelling back and forth across the survey area 10 is repeated until the entire area is mapped. It will be appreciated that the greater the number of vessels employed, the quicker the survey area can be mapped.

As with the first vessel 14, in the preferred embodiment the second vessel 20 is also an autonomous unmanned surface vessel (USV), but it will of course be understood that a conventional vessel could be employed. Unmanned and autonomous vessels have a number of advantages over conventional vessels. The absence of a crew and the associated equipment required, including safety and support equipment, significantly reduces the size of the vessel and the running costs, increases the potential time that the vessel can operate, effectively eliminates risk to human life, and allows the vessel to reach otherwise inaccessible areas. A further advantage of such vessels, due to the reduced size and weight owing to the absence of a crew, is a potentially significantly smaller draft, allowing such vessels to safely navigate shallower waters and thus conduct bathymetric surveys of otherwise inaccessible locations or times, for example at low tide. An autonomous vessel also avoids the requirement for a remote operate to control the vessel, and is preferably provided with systems to allow the vessel to take evasive or other actions in response to local environmental conditions, including collision avoidance, suspension of activity during severe weather, or any other necessary actions to ensure the safety of the vessel. Such functionality allows an unmanned autonomous vessel to remain at sea for significantly longer periods that a manned vessel, and during more extreme conditions, allowing a survey to be completed in situations that would require a manned vessel to return to shore, again greatly reducing the time take, cost of, and risk of conducting such bathymetric surveys.

The present invention therefore provides an improved system and method for conducting a bathymetric survey which can reduce the time, cost and risk of the survey and also allow previous inaccessible areas to be subject to survey.

## Claims

1. A bathymetric survey method comprising the steps of traversing a first survey line with a first lead vessel while mapping the seabed and water depth beneath the first vessel; dynamically generating an adjacent survey line, as the first vessel traverses the fist survey line, based on mapping data acquired from traversing the first survey line; and traversing the adjacent survey line with a second vessel trailing the first vessel while mapping the seabed and water depth beneath the second vessel.

2. The bathymetric survey method of claim 1 in which the adjacent survey line is generated such as to minimise overlap between a first swath of seabed corresponding to the first survey line and a second swath of seabed corresponding to the adjacent survey line.

3. The bathymetric survey method of claim 1 or 2 in which the adjacent survey line is generated by the first vessel and transmitted to the second vessel as the first vessel traverses the first survey line.

4. The bathymetric survey method of any of claims 1 to 3 in which the second vessel begins traversing the adjacent survey line while the first vessel is traversing the first survey line.

5. The bathymetric survey method of any preceding claim comprising utilising an unmanned first and/or second vessel.

6. The bathymetric survey method of any preceding claim comprising utilising an autonomous first and/or second vessel.

7. The bathymetric survey method of any preceding claim comprising projecting a multi-beam sonar signal from the first and/or second vessel to map the seabed and water depth.

8. The bathymetric survey method of any preceding claim comprising utilising a plurality of second vessels to conduct the survey.

9. The bathymetric survey method of claim 8 in which all but the rearmost second vessel generate a respective adjacent survey line which the adjacent second vessel traverses.

10. The bathymetric survey method of claim 8 or 9 in which the first vessel dynamically generates an adjacent survey line for each of the port and starboard sides of the first vessel; and a pair of the second vessels simultaneously traverse the adjacent survey lines aft of the first vessel.

11. A bathymetric survey system comprising a first lead vessel including a bathymetric transducer operable to map the seabed and water depth beneath the first vessel when traversing a first survey line; a processor operable to dynamically generate an adjacent survey line, as the first vessel traverses the fist survey line, based on mapping data acquired from the bathymetric transducer; and a second vessel including a bathymetric transducer operable to map the seabed and water depth beneath the second vessel when traversing the adjacent survey line.

12. The bathymetric survey system according to claim 11 in which the first and/or the second vessel are unmanned.

13. The bathymetric survey system according to claim 11 or 12 in which the first and/or the second vessel are autonomous.

14. The bathymetric survey system according to any of claims 11 to 13 in which the processor is located on the first vessel and the first and second vessels are adapted for direct or indirect communication therebetween.

15. The bathymetric survey system according to any of claims 11 to 14 in which the processor is operable to generate the adjacent survey line such as to minimise overlap with the first survey line.
